# DEMANDE DE BREVET EUROPEEN

(11) **EP 0 803 718 A1**
(43) Date de publication de la demande: **29.10.1997**
(21) Numéro de dépôt: 97400622.3
(22) Date de dépôt: 20.03.1997
(51) Int. Cl.: G01K 3/04, G01K 11/06

(54) **Indicateur d'état de conservation pour produits congelés ou réfrigérés**

(30) Priorité: 24.04.1996 FR 9605278
(71) Demandeur: SOCIETE COOL S.a.r.l., F-07800 La Voulte sur Rhône (FR)
(72) Inventeur: Berrebi, Georges, 26270 Cliousclat (FR)
(74) Mandataire: Andreeff, François

(57) **Abrégé**

L' invention concerne un procédé pour surveiller une décongélation éventuel d'un produit congélé ou réfrigéré dans lequel à l'intérieur du produit ou à sa proximité immédiate, on dispose un gel dont le point de fusion est prédéterminé et qui fond au moins partiellement en cas de décongélation du produit et qui par suite du changement de viscosité produite par sa fusion partielle, vient au contact d'un agent de peptisation, entraînant une cassure du gel, c'est-à-dire une liquéfaction au moins partielle de ce gel.

## Description

La présente invention concerne un dispositif qui permet de reconnaître par un simple examen visuel si un produit froid et surtout surgelé est propre ou non à la consommation. L'invention concerne donc un indicateur d'état de conservation pour produits congelés ou réfrigérés notamment de type industriel, médical ou alimentaire. Le produit peut être un produit alimentaire congelé et conservé à basse température (produits surgelés, glaces, etc.) mais il peut s'agir d'un produit frais conservé vers 4°C par exemple, comme les produits conservés dans un réfrigérateur (lait, yaourts...) et les produits pharmaceutiques ou médicaments. L'invention concerne également le procédé de mise en oeuvre du dispositif.

Les surgelés sont des produits sûrs fabriqués avec une extrême rigueur présentant des intérêts incontestables sur le plan microbiologique (au-dessous de - 18 °C, les microbes ne se développent plus) ; toutefois des intoxications alimentaires sont possibles, notamment dans le cas où les surgelés sont accidentellement décongelés puis recongelés. Il en est de même avec des produits frais mais non congelés qui ne se conserveront cependant que s'ils restent sous une température adéquate.

Un acheteur doit pouvoir vérifier qu'un produit, surtout un produit congelé, n'a subi aucune rupture de la chaîne du froid, car on n'est pas sans savoir qu'entre le moment où le produit est surgelé et le moment où il est consommé, la chaîne du froid peut être rompue en de nombreuses occasions.

En effet, à - 18 °C, on stoppe la multiplication des microbes, des levures, et des moisissures. Plus tard la décongélation, les micro-organismes reprennent une vie intense. Entre le transport des marchandises, des livraisons, la vente et les *manipulations de la ménagère, la moindre négligence peut être fatale. De récentes enquêtes au niveau des commerces et des restaurants ont prouvé que la chaîne du froid est rompue dans 30 % des cas (porte d'une armoire réfrigérée mal fermée pendant tout un week-end ou interruption d'électricité, etc.). En dehors de l'examen des boîtes ou des paquets proposés sur le marché des consommateurs, cet examen n'étant d'ailleurs pas fiable, on trouve aujourd'hui diverses techniques dont celles décrites dans les demandes de brevet européens relatifs aux produits surgelés EP-A-528.712 et EP-A-545.274 ou EP-A-533.008 de Monsieur Georges BERREBI proposant un moyen simple et rapide de contrôle de la chaîne du froid, qui consistent à utiliser un petit glaçon de forme géométrique, coloré dans sa masse, fluorescent de surcroît, moulé sur un support, ou maintenu entre des index, le tout étant intégré à l'intérieur d'une minuscule boîte hermétique transparente qui accompagne l'emballage du produit surgelé d'une façon inviolable. La présente invention concerne de nouvelles réalisations pratiques perfectionnées de l'art antérieur en utilisant un mélange liquide apte à contrôler des températures de l'ordre de + 6 °C à - 30 °C. Le dispositif selon l'invention prend en compte non seulement la variation de température, mais également sa durée.

La présente invention est basée sur le procédé suivant :

Une enceinte disposée sur ou dans le produit à surveiller contient un gel (ou liquide eutectique) dont le point de fusion est prédéterminé, par exemple - 21, - 18, - 12, - 3 °C ou + 4 °C (liquide eutectique approprié voire de l'eau à 0 °C). La température choisie est fonction de la température autour de laquelle doit être conservé le produit surgelé ou frais. Ce gel peut être disposé dans au moins un espace fermé qui géométriquement a la forme par exemple d'une bille ou d'une pastille, donc d'un élément de type gélule, microbille, capsule, microcapsule ou toute autre forme géométrique équivalente.

Lorsque le produit alimentaire ou pharmaceutique est porté à la température choisie de congélation (- 15 °C par exemple) ou de réfrigération (0 °C par exemple), la bille ou la capsule casse sous l'effet de la solidification du gel (ou du liquide eutectique solidifié). Ces billes ou microcapsules ou autres espèces sont déposées à l'intérieur de l'emballage sur un support qui renferme un absorbant ou un adsorbant. Sur cet absorbant ou adsorbant, ou sur le support lui-même, lorsque celui-ci constitue tout seul l'absorbant ou l'adsorbant, on dispose au moint un agent de peptisation.

A noter que l'enceinte ou le support ou l'absorbant ou l'adsorbant peut constituer au moins partiellement l'emballage lui-même du produit dont on surveille la température.

Toute modification accidentelle de la température du produit congelé ou réfrigéré ou frais se traduit par une fusion partielle du gel.

Le gel qui n'est plus solide alors à ce stade entre en contact avec l'agent de peptisation. Celui-ci est un agent de peptisation adéquat par exemple un sel d'ammonium, une sel d'ammonium quaternaire, un sel de table (chlorure de sodium) ou un acide fort ou faible. La fusion partielle du gel se traduit par un changement de viscosité (rhéologie) de ce gel.

Lorsque le gel fondu entre en contact avec ledit agent, cela provoque une peptisation du gel qu'on appelle encore cassure du gel c'est-à-dire une liquéfaction de ce gel. Selon l'invention le produit liquéfié ou partiellement liquéfié c'est-à-dire le gel liquéfié ou partiellement liquéfié se déplace sur l'absorbant ou adsorbant. Cet absorbant ou adsorbant peut être de l'alumine, du papier silicaté, un buvard, un papier buvard, un buvard de filtre ou tout matériel équivalent.

Le gel encapsulé ou l'absorbant ou l'adsorbant est coloré par un agent colorimétrique ou renferme un agent colorimétrique. Cet agent, lorsqu'il est atteint par le produit liquéfié c'est-à-dire le gel liquéfié donne lieu alors à une coloration choisie qui est nettement visible et prévient le responsable de la chaîne du froid ou des produits frais ou l'utilisateur du produit que ledit produit a été décongelé ou porté à une température supérieure à celle à laquelle il aurait dû être conservé.

Cette coloration peut, en fonction de la place de l'agent colorimétrique sur l'absorbant ou adsorbant, être signalée immédiatement par exemple si ledit agent est placé sur l'absorbant ou l'adsorbant au voisinage immédiat de la cassure du gel. Mais si l'agent colorimétrique est disposé un peu plus loin sur l'absorbant ou adsorbant, c'est-à-dire à une certaine distance (distance prédéterminée lors de la fabrication du dispositif) de l'endroit où la peptisation a eu lieu, la "cassure" du gel ne sera alors connue que quelques instants plus tard, lorsque par chromatographie, le gel liquéfié aura atteint la zone de l'absorbant ou adsorbant où est placé l'agent de coloration. On peut de cette façon permettre la connaissance de la décongélation ou du non-respect de la température de 4 °C, par exemple un quart d'heure après le début de cette décongélation ou d'un réchauffement anormal ou dix minutes ou une heure, ou tout autre délai choisi parce qu'avant un certain temps on estime que la décongélation partielle ou le réchauffement anormal du produit surgelé ou frais est encore tout à fait tolérable. On dit ici que le procédé selon l'invention permet un retard à l'annonce de la décongélation (retard toléré).

Donc en bref le principe de l'invention consiste à :
1. déposer dans un emballage (enceinte) d'un produit dont on désire surveiller la température, un gel sur un support absorbant ou adsorbant (ce support pouvant être l'emballage lui-même). Ce gel plus ou moins gélatineux est déposé tel quel ou est déposé à l'intérieur d'au moins une capsule, microcapsule ou espace équivalent ; lorsque le produit est amené à la température adéquate de congélation ou de réfrigération, il se solidifie. Si le gel est disposé dans une capsule, en se solidifiant il provoque la cassure (l'éclatement) de la capsule ;
2. provoquer en cas de réchauffement anormal (rupture de la chaîne du froid) un ramollissement du gel ; ce gel en se déplaçant peu à peu vient au contact d'un agent de peptisation qui casse le gel (peptisation) et provoque sa liquéfaction. Le gel liquéfié vient alors au contact d'au moins un agent colorimétrique. La décoloration qui se produit alerte alors le consommateur ou celui qui est chargé de la surveillance des emballages.

Ainsi selon l'invention, on peut régler différents paramètres : on peut par exemple régler la quantité en gel utilisée, la quantité de l'agent de peptisation jugée critique, pour intégrer le temps. On intègre ainsi le temps avec la température en jouant sur la gélification et l'agent de peptisation. On peut régler, sur l'absorbant ou l'adsorbant, la distance entre l'endroit où se produit la cassure (peptisation) du gel et l'agent de coloration, la vitesse de déplacement sur l'absorbant ou adsorbant du gel liquéfié, donc ici la vitesse de déplacement chromatographique. On peut régler encore la viscosité du liquide eutectique ou gel qui se trouve dans l'enceinte.

Ainsi l'effet peptisant joue sur la nature de l'absorbant ou de l'adsorbant. On joue sur la chromatographie de l'absorbant ou de l'adsorbant. On intègre la température de fusion avec le temps.

D'un point de vue réalisation pratique, l'enceinte renferme un gel eutectique de préférence enfermé dans une bille ou une capsule ou microcapsule. A proximité immédiate du gel, est disposé un sel de table ou tout produit équivalent capable de peptiser le gel. Lorsque la rupture du froid ou le réchauffement parasite survient, le gel (qui s'il était au préalable enfermé dans une capsule ou espace similaire, avait commencé par casser ladite capsule en portant ledit produit à sa température de conservation) passe de l'état solide à l'état gélatineux et change de rhéologie.

De ce fait il coule et atteint le sel et du fait du contact avec ce dernier, il se produit une peptisation (appelée "cassure du gel") donc une liquéfaction du gel qui amorce alors un cheminement chromatographique sur l'absorbant ou l'adsorbant en direction de l'agent colorimétrique. Si par exemple, le rapport massique sel/gel est d'environ 1, c'est la totalité du gel liquéfié qui peut migrer sur l'absorbant ou l'adsorbant. Le gel liquéfié atteint ainsi l'agent colorimétrique et à ce moment là, la décongélation ou le début du réchauffement est signalé à l'utilisateur ou au responsable des produits congelés ou des produits frais.

A noter que l'agent colorimétrique peut être placé dans le gel lui-même contenu dans l'enceinte et que selon les besoins le gel peut être coloré ou non, de même que l'agent de peptisation et/ou l'absorbant (ou l'adsorbant) peuvent être coloré(s) ou non.

## Revendications

1. Procédé pour surveiller une décongélation éventuelle d'un produit congelé ou le réchauffement éventuel d'un produit frais ou réfrigéré dans lequel à l'intérieur dudit produit ou à sa proximité immédiate on dispose un gel (ou liquide eutectique solidifié lorsqu'il n'y a pas encore décongélation ou réchauffement) dont le point de fusion est prédéterminé et qui se ramollit ou fond au moins partiellement en cas de décongélation ou de réchauffement dudit produit et qui par suite de son changement de viscosité produite par sa fusion partielle, vient au contact d'un agent de peptisation, entraînant une peptisation du gel (cassure du gel) c'est-à-dire une liquéfaction au moins partielle de ce gel.

2. Procédé pour surveiller une décongélation éventuelle d'un produit congelé ou le réchauffement éventuel d'un produit frais ou réfrigéré dans lequel à l'intérieur dudit produit ou à sa proximité immédiate on dispose dans une enceinte un gel (ou liquide eutectique solidifié lorsqu'il n'y a pas encore décongélation ou réchauffement) dont le point de fusion est prédéterminé et qui se ramollit ou fond au moins partiellement en cas de décongélation ou de réchauffement dudit produit et qui par suite de son changement de viscosité produite par sa fusion partielle, vient au contact d'un agent de peptisation, entraînant une peptisation du gel (cassure du gel) c'est-à-dire une liquéfaction au moins partielle de ce gel, le procédé étant en outre caractérisé en ce que le gel (ou liquide eutectique) est disposé dans l'enceinte dans au moins un espace fermé qui a la forme d'une bille ou d'une capsule ou toute autre. forme équivalente, l'espace fermé se cassant sous l'effet de solidification du gel (ou du liquide eutectique), cette solidification produisant lorsque ledit produit congelé, réfrigéré ou frais est porté la température de conservation du produit.

3. Procédé selon la revendication 2 dans lequel l'espace a la forme d'une capsule ou microcapsule.

4. Procédé selon l'une des revendications 1 à 3 dans lequel le gel au moins partiellement fondu ou ramolli se déplace vers un agent de peptisation sur un absorbant ou un adsorbant coloré par un agent colorimétrique ou renfermant un agent colorimétrique lequel absorbant ou adsorbant lorsqu'il est atteint par le gel peptisé (donc liquéfié) donne lieu à une coloration.

5. Procédé selon l'une des revendications 2 à 4 dans lequel ladite enceinte ou l'absorbant ou l'adsorbant constitue au moins partiellement l'emballage lui-même dudit produit.

6. Procédé selon l'une des revendications 4 et 5 dans lequel l'agent colorimétrique est disposé à une distance variable prédéterminée de l'endroit où la peptisation s'est effectuée pour lire avec un retard toléré le début de la décongélation ou du réchauffement.

7. Procédé selon l'une des revendications 4 à 6 dans lequel l'agent colorimétrique est placé dans le gel lui-même contenu dans l'enceinte.

8. Procédé selon l'une des revendications 6 et 7 dans lequel ledit retard est prédéterminé par le choix d'au moins un paramètre choisi notamment parmi la quantité d'agent de peptisation, la quantité du gel, la distance entre le lieu de cassure et l'agent colorimétrique, la vitesse de déplacement du gel liquéfié sur l'agent absorbant ou adsorbant, la viscosité du gel.

9. Procédé selon l'une des revendications 4 à 8 dans lequel l'absorbant ou l'adsorbant est choisi dans le groupe constitué par l'alumine, le papier silicaté, un buvard, un buvard de filtre.

10. Procédé selon l'une des revendications 1 à 9 dans lequel l'agent de peptisation est choisi dans le groupe constitué par un sel d'ammonium, un sel d'ammonium quaternaire, du chlorure de sodium ou un acide fort ou faible.

11. Dispositif pour la mise en oeuvre du procédé selon l'une des revendications 1 à 10 comportant une enceinte renfermant le gel coloré ou non, l'agent de peptisation et l'absorbant ou adsorbant coloré ou non.
